# EUROPEAN PATENT APPLICATION

(11) **EP 2 107 559 A1**
(43) Date of publication of application: **07.10.2009**
(21) Application number: 09004531.1
(22) Date of filing: 30.03.2009
(51) Int. Cl.: G11B 5/855, G11B 5/86

(54) **Production method of magnetic transfer master carrier, magnetic transfer master carrier, magnetic transfer method, and magnetic recording medium**

(30) Priority: 31.03.2008 JP 2008093359
(71) Applicant: Fujifilm Corporation, Tokyo 106-8620 (JP)
(72) Inventor: Nishida, Yoichi, Odawara-shi Kanagawa (JP); Usuki, Kazuyuki, Odawara-shi Kanagawa (JP)
(74) Representative: Siegert, Georg

(57) **Abstract**

A production method of a magnetic transfer master carrier, the method including forming an imprint resist layer on a surface of a magnetic layer of a laminate which includes a first base material and the magnetic layer laminated thereon; forming a resist pattern, following shapes of concave portions of a mold, on the surface of the magnetic layer by pressing the concave portions against the imprint resist layer; and forming magnetic convex portions on the first base material by removing the mold from the imprint resist layer and then etching a surface of the magnetic layer which surface has no resist pattern, wherein the mold includes a second base material and the concave portions formed by etching a surface of the second base material so as to correspond to a pattern of information to be recorded on a magnetic recording medium.

## Description

### BACKGROUND OF THE INVENTION

### Field of the Invention

The present invention relates to a production method of a magnetic transfer master carrier used for magnetically transferring information onto a magnetic recording medium; a magnetic transfer master carrier obtained by the production method; a magnetic transfer method using the magnetic transfer master carrier; and a magnetic recording medium obtained by the magnetic transfer method.

### Description of the Related Art

Magnetic recording media record, as a so-called preformat, servo information used for tracking servo. The servo information is recorded on magnetic recording media using, for example, a master carrier. Such a master carrier has patterned magnetic portions formed correspondingly to a pattern of the servo information. When a recording magnetic field is applied to magnetic recording media with being closely attached to the magnetic potions of the master carrier, the magnetic recording media are magnetized based on the pattern of the magnetic portions. As a result, the servo information is recorded on the magnetic recording media at one time.

One master carrier has a surface with convex portions on which top surfaces a magnetic layer is laid, as described in Japanese Patent Application Laid-Open (JP-A) No. 2001-256644. This master carrier is often used since it is advantageous in, for example, that the magnetic layer on the top surfaces sufficiently closely adheres to magnetic recording media, and that it exhibits good magnetic transfer performance.

Also, JP-A No. 2000-195048 proposes a master carrier having convex-shaped magnetic layers. This master carrier is preferably used since it is advantageous in, for example, that no unnecessary magnetic layer is formed between convex-shaped magnetic layers adjacent to each other, and that an underlying layer is easily formed.

In the master carrier production method described in JP-A No. 2000-195048, a photoresist is applied onto a magnetic layer formed on a substrate made, for example, of glass to form a photoresist layer; and the thus-formed photoresist layer is exposed to light using a photomask and then developed to form a resist pattern. This production method requires considerably shorter time as compared with an electron beam writing method in which a photoresist layer is irradiated with an electron beam for direct writing. Formation of a resist pattern having a size of 6.35 cm (2.5 inch) (or 8.89 cm (3.5 inch)) by the electron beam writing method generally requires several days.

However, the above-described method, in which a resist pattern is formed through light exposure using a photomask, decreases in patterning accuracy as compared with the electron beam writing method, which is problematic.

Also, when information to be recorded on magnetic recording media is servo information, the servo information must be recorded on the entire magnetic recording medium and the formed patterns must be different one another. Thus, the method in which a photomask is used as described in JP-A No. 2000-195048 is not applicable to recording of servo information, which is problematic.

Also, in the master carrier disclosed in JP-A No. 2001-256644, the base material thereof is produced through electrodeposition using, as an original plate, an original master having a concavo-convex surface. Such production method that uses the original master as an original plate is suitable to mass production.

However, the magnetic layer of this master carrier is formed through, for example, sputtering on convex portions which have previously been formed as part of the base material. Thus, formation of a thick magnetic layer poses a problem in that processing accuracy thereof degrades; e.g., the widths of the convex portions become large.

Under such circumstances, demand has arisen for a production method of a magnetic transfer master carrier (a magnetic transfer master carrier-production method) which method can produce, at good processing accuracy, a magnetic transfer master carrier capable of readily performing magnetic transfer of, for example, servo information.

### BRIEF SUMMARY OF THE INVENTION

The present invention solves the above-described existing problems and aims to provide the following objects. That is, an object of the present invention is to provide a magnetic transfer master carrier-production method which exhibits good processing accuracy and which is reduced in production time, cost, etc.; a magnetic transfer master carrier obtained by the magnetic transfer master carrier-production method; a magnetic transfer method using the magnetic transfer master carrier; and a magnetic recording medium obtained by the magnetic transfer method.

Means for solving the problems pertinent in the art are as follows.
< 1 > A production method of a magnetic transfer master carrier, the production method including:
   forming an imprint resist layer on a surface of a magnetic layer of a laminate which includes a first base material and the magnetic layer laminated on the first base material,
   forming a resist pattern, following shapes of concave portions of a mold, on the surface of the magnetic layer by pressing the concave portions against the imprint resist layer, and
   forming magnetic convex portions on the first base material by removing the mold from the imprint resist layer and then etching a surface of the magnetic layer which surface has no resist pattern,
   wherein the mold includes a second base material and the concave portions formed by etching a surface of the second base material so as to correspond to a pattern of information to be recorded on a magnetic recording medium, and
   wherein the magnetic transfer master carrier includes the first base material and the magnetic convex portions made of a magnetic material, the magnetic convex portions being arranged on the first base material correspondingly to the pattern of the information, and forms a magnetic field pattern by absorbing a magnetic flux in the magnetic convex portions when a magnetic field is applied to the magnetic transfer master carrier.
   In the production method according to < 1 > above for a magnetic transfer master carrier, when the concave portions of the mold are pressed against the imprint resist layer formed on the magnetic layer of the laminate, the resist pattern is formed on the surface of the magnetic layer.
< 2 > The production method according to < 1 > above, wherein the laminate further includes an underlying layer between the first base material and the magnetic layer.
< 3 > The production method according to < 1 > or < 2 > above, wherein the magnetic layer has perpendicular magnetic anisotropy.
< 4 > A magnetic transfer master carrier including:
   a first base material, and
   magnetic convex portions made of a magnetic material, the magnetic convex portions being arranged on the first base material correspondingly to a pattern of information to be recorded on a magnetic recording medium,
   wherein the magnetic transfer master carrier forms a magnetic field pattern by absorbing a magnetic flux in the magnetic convex portions when a magnetic field is applied to the magnetic transfer master carrier, and is obtained by the production method according to any one of < 1 > to < 3 > above.
< 5 > A magnetic transfer method including:
   initially magnetizing a perpendicular magnetic recording medium by applying a magnetic field thereto,
   closely attaching the magnetic transfer master carrier according to < 4 > above to the initially magnetized perpendicular magnetic recording medium, and
   magnetically transferring information to the perpendicular magnetic recording medium by applying thereto a magnetic field whose direction is opposite to a direction of the magnetic field applied in the initial magnetization, with the perpendicular magnetic recording medium and the magnetic transfer master carrier being closely attached to each other, so that the information is recorded on the perpendicular magnetic recording medium.
< 6 > A magnetic recording medium obtained by the magnetic transfer method according to < 5 > above.

The present invention can provide a magnetic transfer master carrier-production method which exhibits good processing accuracy and which is reduced in production time, cost, etc.; a magnetic transfer master carrier obtained by the magnetic transfer master carrier-production method; a magnetic transfer method using the magnetic transfer master carrier; and a magnetic recording medium obtained by the magnetic transfer method. These can solve the above-described existing problems.

### BRIEF DESCRIPTION OF THE DRAWINGS

FIG. 1 is a schematic partial cross-sectional view of a magnetic transfer master carrier.
FIG. 2 is a top view of the magnetic transfer master carrier.
FIG. 3A is an explanatory view of a step of a production method of a magnetic transfer master carrier.
FIG. 3B is an explanatory view of a step of a production method of a magnetic transfer master carrier.
FIG. 3C is an explanatory view of a step of a production method of a magnetic transfer master carrier.
FIG. 3D is an explanatory view of a step of a production method of a magnetic transfer master carrier.
FIG. 3E is an explanatory view of a step of a production method of a magnetic transfer master carrier.
FIG. 4A is an explanatory view of a step of a production method of a mold.
FIG. 4B is an explanatory view of a step of a production method of a mold.
FIG. 4C is an explanatory view of a step of a production method of a mold.
FIG. 4D is an explanatory view of a step of a production method of a mold.
FIG. 4E is an explanatory view of a step of a production method of a mold.
FIG. 4F is an explanatory view of a step of a production method of a mold.
FIG. 5A schematically illustrates a magnetic transfer method.
FIG. 5B schematically illustrates a magnetic transfer method.
FIG. 5C schematically illustrates a magnetic transfer method.
FIG. 6 illustrates the direction of magnetization of a magnetic layer of a perpendicular magnetic recording medium having undergone initial magnetization.
FIG. 7 is a cross-sectional explanatory view of a perpendicular magnetic recording medium and a magnetic transfer master carrier at a magnetic transfer step.
FIG. 8 illustrates the direction of magnetization of a magnetic layer of a perpendicular magnetic recording medium obtained after a magnetic transfer step.

### DETAILED DESCRIPTION OF THE INVENTION

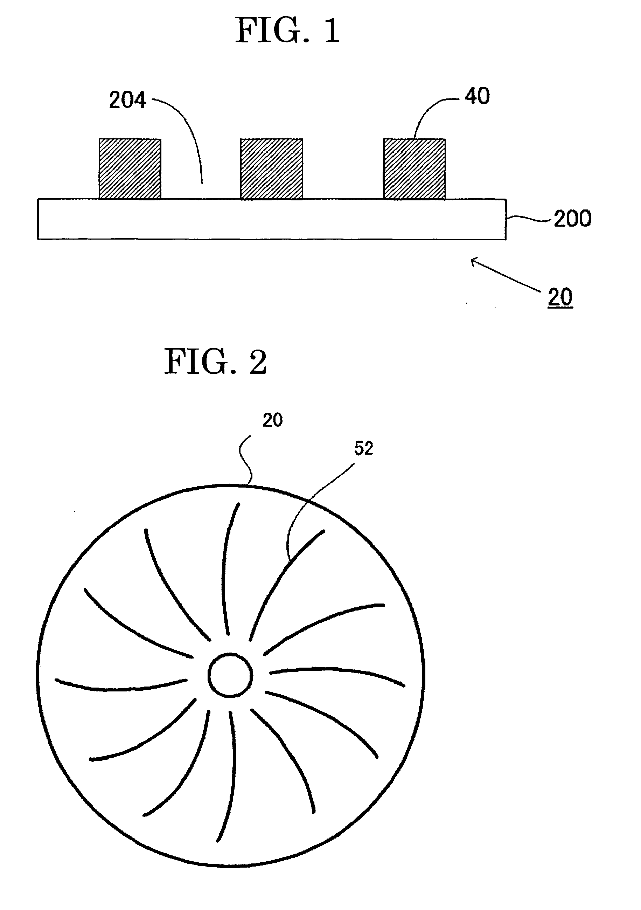

With reference to FIGs. 1 and 2, first will be described a magnetic transfer master carrier obtained by a production method of the present invention which is for a magnetic transfer master carrier.

### [Magnetic transfer master carrier]

FIG. 1 is a schematic partial cross-sectional view of a magnetic transfer master carrier 20. FIG. 2 is a top view of the magnetic transfer master carrier 20. As shown in FIG. 1, the magnetic transfer master carrier 20 has a first base material 200 and magnetic convex portions 40.

The material for the first base material 200 is not particularly limited and can be appropriately selected depending on the purpose. Examples thereof include known materials such as glass, synthetic resins (e.g., polycarbonates), metals (e.g., nickel and aluminum), silicon and carbon.

The shape of the first base material 200 is not particularly limited and can be appropriately selected depending on the purpose. The magnetic transfer master carrier 20 shown in FIG. 2 has a disc shape.

The thickness of the first base material 200 is not particularly limited and can be appropriately selected depending on the purpose. The first base material 200 preferably has a thickness of 0.05 mm to 1 mm, more preferably 0.1 mm to 0.5 mm.

Notably, when the first base material 200 is made of Ni, the thickness thereof is preferably 0.1 mm to 0.3 mm.

The magnetic convex portions 40 are arranged on the first base material 200 correspondingly to a pattern corresponding to information to be recorded on a magnetic recording medium. A plurality of magnetic convex portions 40 are arranged on the first base material 200. Concave portions 204 are formed among the magnetic convex portions 40. The bottom surfaces of the concave portions 204 (i.e., the surface of the first base material 200) are not provided with magnetic portions.

The information to be recorded on the magnetic recording medium is, for example, servo information used for performing tracking servo; e.g., servo signals and address information signals. As shown in FIG. 2, the magnetic convex portions 40 on the first base material 200 form a radially extending pattern 52 corresponding to a pattern of information to be recorded.

As described below, the magnetic convex portions 40 are formed from a laminate prepared by laminating a magnetic layer on the first base material 200. The magnetic layer of the laminate is etched to remove unnecessary portions of the magnetic layer, whereby magnetic convex portions 40 are formed.

The magnetic material for the magnetic convex portions 40 include Co, CoPtCr, CoCr, CoPtCrTa, CoPtCrNbTa, CoCrB, CoNi, Fe, FeCo, FePt, FeNi, CoNb, FeSiAl and FeTaN.

Notably, in the case of a magnetic transfer master carrier used for recording information on a perpendicular magnetic recording medium, the material for the magnetic convex portions 40 is alloys or compounds composed of at least one ferromagnetic metal selected from Fe, Co and Ni and at least one non-magnetic atom selected from Cr, Pt, Ru, Pd, Si, Ti, B, Ta and O.

In this case, the magnetic convex portions 40 have magnetic anisotropy directed perpendicularly to a recording surface of the magnetic recording medium (perpendicular magnetic anisotropy).

The thickness (height) of each magnetic convex portion 40 is preferably 10 nm to 200 nm, more preferably 20 nm to 150 nm, still more preferably 40 nm to 100 nm.

When the thickness (height) of the magnetic convex portion 40 is less than 10 nm, the magnetic convex portion may not attract a sufficient amount of magnetic flux. Whereas when the thickness (height) thereof is more than 200 nm, the remaining magnetization of the magnetic convex portion is increased to prevent desired transfer. Also, in general, the thicker the magnetic convex portion 40, the higher the cost therefor. Thus, the above range of 40 nm to 100 nm is preferred.

If necessary, the magnetic convex portion 40 may be provided with, for example, an underlying layer, a protective layer and a lubricating layer.

The underlying layer (not shown) is formed under the magnetic convex portion 40 (i.e., between the magnetic convex portion 40 and first base material 200). Examples of the material for the underlying layer include metals, alloys and compounds, each containing at least one selected from Pt, Ru, Pd, Co, Cr, Ni, W, Ta, Al, P, Si and Ti, with platinum group metals (e.g., Pt and Ru) and alloys thereof being preferred. The underlying layer may have a single- or multi-layer structure. The thickness of the underlying layer is preferably 1 nm to 30 nm, more preferably 3 nm to 10 nm.

The protective layer (not shown) is formed on the magnetic convex portion 40. The protective layer is made, for example, diamond-like carbon. The thickness of the protective layer is generally 10 nm or less. Furthermore, a lubricating layer (not shown) made, for example, of a fluorine-based lubricant (e.g., PFPE) may be formed on the protective layer.

### [Production method of magnetic transfer master carrier]

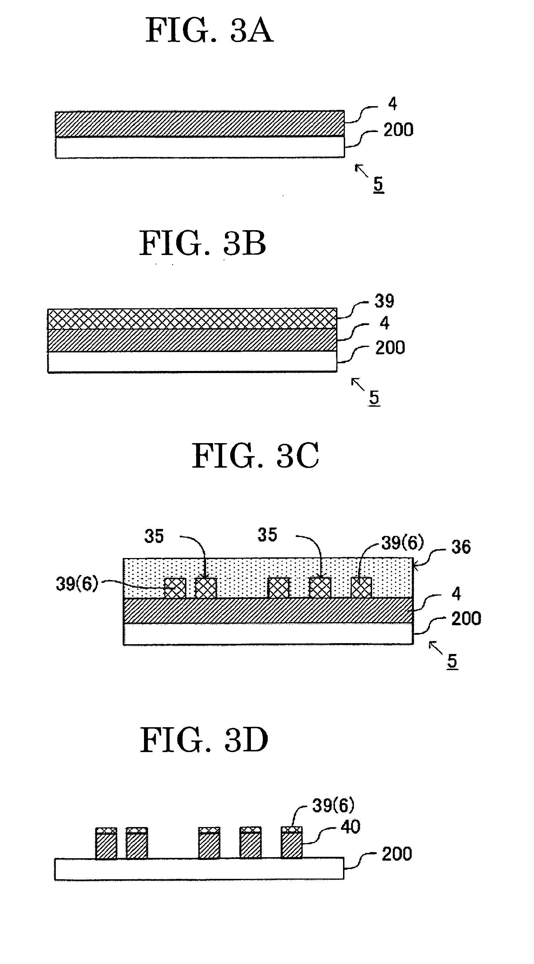

A production method of a magnetic transfer master carrier according to the present embodiment includes an imprint resist layer-forming step, a resist pattern-forming step, and a magnetic convex portion-forming step. FIGs. 3A to 3E are explanatory views of steps of the production method of a magnetic transfer master carrier. With reference to FIGs. 3A to 3E, next will be described the production method of a magnetic transfer master carrier.

### (Imprint resist layer-forming step)

The imprint resist layer-forming step is a step of forming an imprint resist layer 39 (see FIG. 3B) on a surface of a laminate 5 (see FIG. 3A) having a first base material 200 and a magnetic layer 4 on the first base material 200, which surface is a surface of the magnetic layer 4.

The imprint resist layer 39 is made of at least one selected from a thermoplastic resin, a thermosetting resin and a photocurable resin.

The imprint resist layer 39 is formed by applying an imprint resist composition liquid, which is prepared by dissolving the above resin and the like in a predetermined solvent, onto a surface of the first base material 200 by a known coating method such as spin coating.

The thickness of the imprint resist layer is appropriately determined in consideration of, for example, the depth of each concave portion of a mold described below. In general, it is preferably 10 nm to 100 nm.

In the laminate 5, the magnetic layer 4 on the first base material 200 is formed using a known technique such as sputtering. The thickness of the magnetic layer 4 is appropriately determined according to the height of the magnetic convex portion 40.

Notably, in another embodiment, the magnetic convex portion 40 having the underlying layer is formed. In this case, an underlying layer is formed between the first base material 200 and the magnetic layer 4 to form the laminate 5.

Further, in still another embodiment, a hard mask serving as a mask layer may be formed on the magnetic layer 4. The mask layer is appropriately formed in consideration of a method for etching the magnetic layer 4. Examples of the material for the mask layer include metals, alloys and compounds, each containing at least one selected from C, Cr, W, Ta, Si and Ti. The mask layer is formed by a known method such as CVD and sputtering. The thickness of the mask layer is appropriately determined in consideration of the height of a magnetic convex portion 40 to be formed and the thickness of the imprint resist layer 39.

### (Resist pattern-forming step)

The resist pattern-forming step is a step of forming, on a surface of the magnetic layer 4, a resist pattern 6, following shapes of concave portions 35 of a mold 36, by pressing the concave portions 35 against the imprint resist layer 39, the mold having a second base material and the concave portions 35 formed by etching a surface of the second base material so as to correspond to a pattern of information to be recorded on a magnetic recording medium (see FIG. 3C).

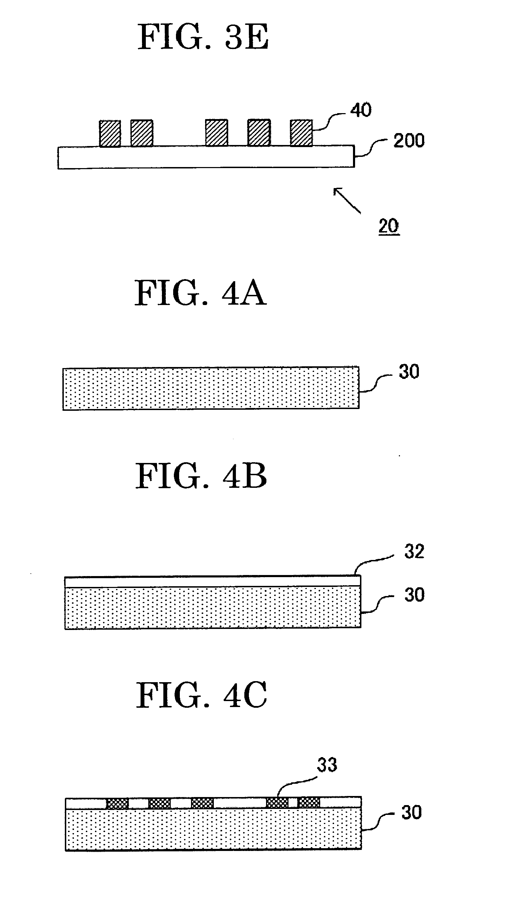

The mold 36 is used for forming the resist pattern 6 in the imprint resist layer 39. As described above, the mold 36 has the second base material and the concave portions 35 formed by etching a surface of the second base material so as to correspond to a pattern of information. FIGs. 4A to 4F are explanatory views of a production method of the mold 36. With reference to FIGs. 4A to 4F, the production method of the mold 36 will next be described.

As shown in FIG. 4A, first, a base material 30 (i.e., the second base material) for producing the mold 36 is provided.

The material for the second base material 30 is not particularly limited and can be appropriately selected depending on the purpose. Examples thereof include PETs, PENs, polycarbonates, low-melting-point fluorine resins, PMMAs, silicon and quartz.

Notably, when an imprint resist layer 39 made of photocurable resin is used in the imprint resist layer-forming step, the second base material 30 must be made of a translucent material.

Next, as shown in FIG. 4B, an electron-beam resist liquid is applied onto a surface of the second base material 30 by a known coating method (e.g., spin coating) to form an electron-beam resist layer 32. Thereafter, the thus-formed electron-beam resist layer 32 is baked (pre-baked).

Next, as shown in FIG. 4C, the electron-beam resist layer 32 is exposed to light using an unillustrated electron beam exposure apparatus having a high-precision rotary stage or X-Y stage. Specifically, the second base material 30 having thereon the electron-beam resist layer 32 is set on the stage of the unillustrated exposure apparatus. While the second base material 30 is being rotated, an electron beam modulated correspondingly to a servo signal is applied to the electron-beam resist layer 32, whereby a pattern corresponding to the servo signal is formed in the electron-beam resist layer 32. In FIG. 4C, portions indicated by reference numeral 33 are exposed portions.

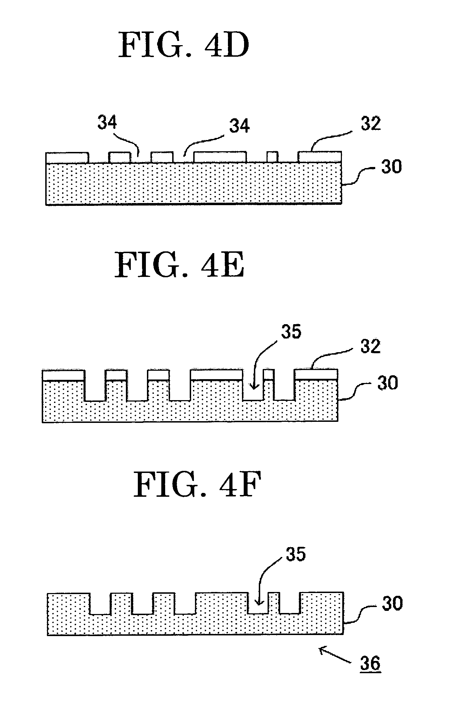

Next, as shown in FIG. 4D, the resist layer 32 is developed to remove the exposed portions 33, whereby a patterned resist layer 32 is formed on the second base material 30. After development, baking (post-baking) is carried out for enhancing adhesion between the patterned resist layer 32 and the second base material 30.

Next, as shown in FIG. 4E, the second base material 30 is etched using the resist layer 32 as a mask. Specifically, the second base material 30 exposed to dent portions 34 (corresponding to the exposed portions of the resist layer 32) is etched to form concave portions 35. This etching is preferably carried out through anisotropic etching such as reactive ion etching (RIE).

Next, as shown in FIG. 4F, the resist layer 32 remaining on the second base material 30 is removed through, for example, ashing, if necessary. Alternatively, the remaining resist layer 32 may be removed using a removing liquid.

After removal of the resist layer 32, a mold 36 is obtained which is used in a production method of a magnetic transfer master carrier.

Referring again to FIG. 3C, the following description will be given. As shown in FIG. 3C, the concave portions 35 of the mold 36 are pressed against the imprint resist layer 39 formed on the magnetic layer 4 of the laminate 5. When the concave portions 35 of the mold 36 are pressed against the imprint resist layer 39, the concave portions 35 are filled with the imprint resist layer 39. As a result, there is formed a resist pattern 6 made of the imprint resist layer 39 which pattern corresponds to the concave portions 35.

When the imprint resist layer 39 is made of photocurable resin, the imprint resist layer 39 is cured by irradiating the imprint resist layer 39 with light emitted through the translucent mold 36 from the outside.

When the imprint resist layer 39 is made of thermosetting resin, the imprint resist layer 39 is cured through heating with the mold 36 being pressed thereagainst.

When the imprint resist layer 39 is made of thermoplastic resin, the imprint resist layer 39 is cured through cooling with the mold 36 being pressed thereagainst, since the imprint resist layer 39 is softened; i.e., increased in temperature, during pressing of the mold 36 thereagainst.

### (Magnetic convex portion-forming step)

The magnetic convex portion-forming step is a step in which the mold 36 is removed from the imprint resist layer 39 and then, surfaces of the magnetic layer 4 which have no resist pattern 6 are etched to form the magnetic convex portions 40 on the first base material 200 (see FIG. 3D).

As shown in FIG. 3D, the mold 36 is removed from the imprint resist layer 39 formed on the laminate 5 and then, surfaces of the magnetic layer 4 which have no resist pattern 6 are etched through, for example, Ar ion beam etching until the first base material 200 is exposed. In other words, the magnetic layer 4 is etched to remove unnecessary portions of the magnetic layer 4. After the unnecessary portions have been removed, the magnetic convex portions 40 are formed on the first base material 200.

Thereafter, the resist pattern 6 remaining on the magnetic convex portions 40 is removed through, for example, ashing, if necessary (removing step, see FIG. 3E). Through the above procedure, a magnetic transfer master carrier 20 is obtained.

If necessary, the magnetic transfer master carrier 20 may be washed. Also, a protective layer, etc. may be appropriately formed on the magnetic convex portions 40 through a known technique such as sputtering.

In the magnetic transfer master carrier-production method of the present invention, by using the mold 36, the resist pattern 6 can be easily formed in the imprint resist layer 39 formed on the magnetic layer 4 of the laminate 5.

Also, in the magnetic transfer master carrier-production method of the present invention, the thicknesses (heights) of magnetic convex portions 40 can be set as desired. For example, the magnetic transfer master carrier having magnetic convex portions 40 with a large thickness can be produced without involving deformation of the magnetic convex portions 40.

Also, in the magnetic transfer master carrier-production method of the present invention, a magnetic transfer master carrier can be produced in which unnecessary magnetic portions do not exist between the magnetic convex portions 40. According to this production method, the magnetic convex portions 40 are easily formed, as intended, on the surface of the first base material 200 correspondingly to information to be recorded.

Also, in the magnetic transfer master carrier-production method of the present invention, a magnetic transfer master carrier whose magnetic convex portions 40 are formed on an underlying layer can be easily produced. The underlying layer can control orientation of crystals contained in the magnetic convex portions 40. Thus, the magnetic transfer master carrier-production method of the present invention is a particularly preferred production method of a magnetic transfer master carrier containing magnetic convex portions 40 having magnetic anisotropy directed perpendicularly to the recording surface of a magnetic recording medium.

### [Magnetic transfer method]

Next will be described a method for recording (or magnetically transferring) information onto a magnetic recording medium (perpendicular magnetic recording medium) using a magnetic transfer master carrier obtained by the production method of a magnetic transfer master carrier.

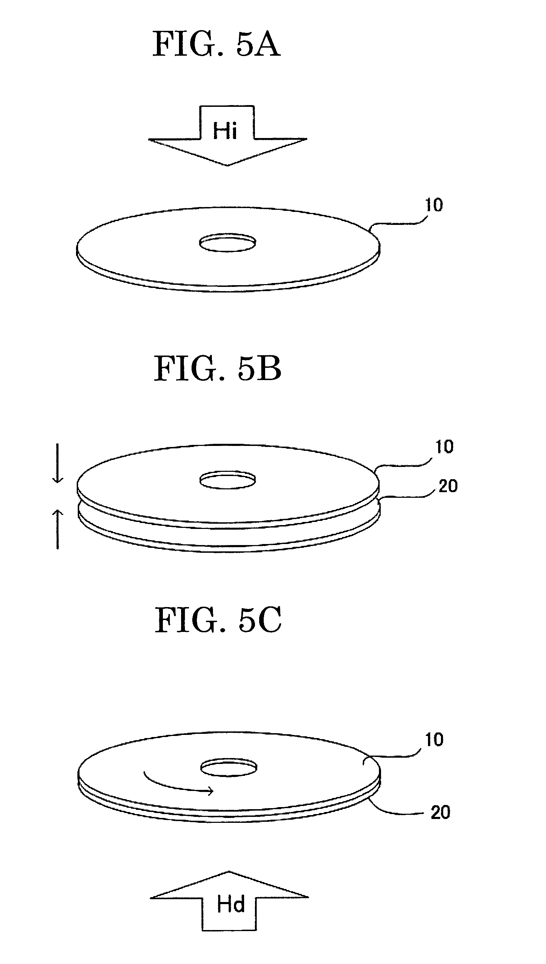

FIGs. 5A to 5C schematically illustrate the magnetic transfer method. The magnetic transfer method includes an initial magnetization step, a closely attaching step and a magnetic transfer step.

### < Initial magnetization step >

The initial magnetization step is a step of initially magnetizing the perpendicular magnetic recording medium 10 (slave disc) by applying a DC magnetic field (Hi) to the perpendicular magnetic recording medium 10.

As shown in FIG. 5A, in the initial magnetization step, the DC magnetic field (Hi) is applied to the perpendicular magnetic recording medium 10. The DC magnetic field (initializing magnetic field) (Hi) is applied to the surface (recording surface) of the perpendicular magnetic recording medium 10 in a perpendicular direction. The DC magnetic field (Hi) is applied using a predetermined magnetic field applying unit (not illustrated). The intensity of the DC magnetic field (Hi) is maintained equal to or higher than the coercive force Hc of the perpendicular magnetic recording medium 10.

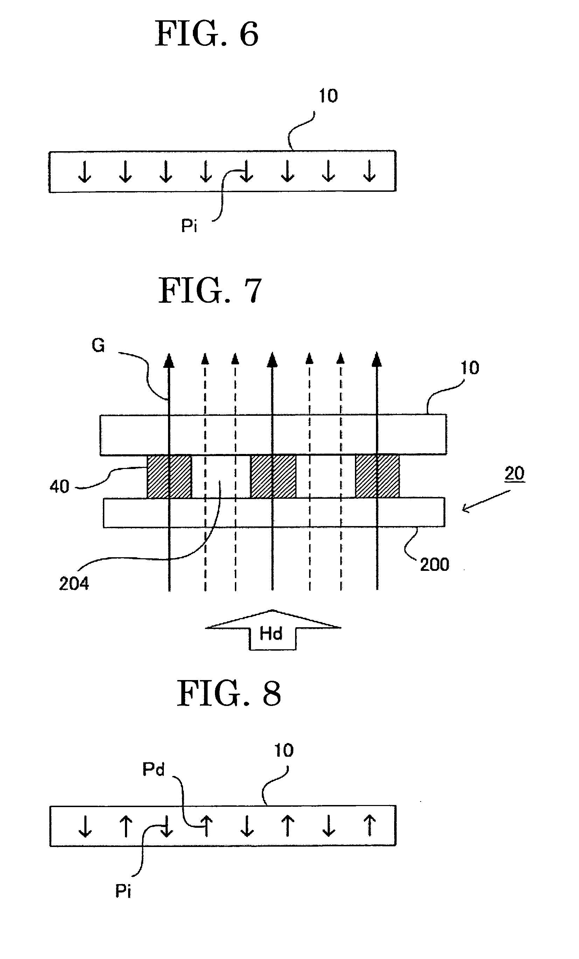

FIG. 6 illustrates the direction of magnetization of a magnetic layer of the initially magnetized perpendicular magnetic recording medium. As shown in FIG. 6, the magnetic layer of the initially magnetized perpendicular magnetic recording medium 10 is initially magnetized unidirectionally and perpendicularly to the surface of the perpendicular magnetic recording medium (disc) 10. Note that arrows indicated by Pi in FIG. 6 correspond to the direction in which the magnetic layer is magnetized.

### < Closely attaching step >

The closely attaching step is a step of closely attaching the magnetic transfer master carrier (master disc) 20 to the initially magnetized perpendicular magnetic recording medium 10.

As shown in FIG. 5B, the initially magnetized perpendicular magnetic recording medium 10 is superposed on and closely attached to the magnetic transfer master carrier 20.

In the closely attaching step, the magnetic convex portions 40 formed on the surface of the magnetic transfer master carrier 20 are closely attached to the perpendicular magnetic recording medium 10. The magnetic transfer master carrier 20 is closely attached to the perpendicular magnetic recording medium 10 through application of a predetermined pressing force.

If necessary, before the magnetic transfer master carrier 20 is closely attached to the perpendicular magnetic recording medium 10, the perpendicular magnetic recording medium 10 may be subjected to a cleaning process (e.g., burnishing) in which minute protrusions or attached powdery dust on its surface is removed using a grind head, a polisher or the like.

In the present embodiment, as shown in FIG. 5B, the magnetic transfer master carrier 20 is closely attached only to one surface of the perpendicular magnetic recording medium 10 in the closely attaching step. Alternatively, in another embodiment, using a perpendicular magnetic recording medium (slave disc) having a magnetic layer on both surfaces, magnetic transfer master carriers 20 may be closely attached to the surfaces.

### < Magnetic transfer step >

The magnetic transfer step is a step of recording, on the perpendicular magnetic recording medium 10, information based on the magnetic transfer master carrier 20 by applying a recording magnetic field (Hd) whose direction is opposite to that of the initializing magnetic field (Hi) to the perpendicular magnetic recording medium 10 and the magnetic transfer master carrier 20 that have been closely attached to each other.

As shown in FIG. 5C, the magnetic field (Hd), whose direction is opposite to that of the initializing magnetic field (Hi), is applied using a predetermined magnetic field applying unit (not illustrated) to the perpendicular magnetic recording medium 10 and the magnetic transfer master carrier 20 that have been closely attached to each other.

FIG. 7 is a cross-sectional explanatory view of the perpendicular magnetic recording medium 10 and the magnetic transfer master carrier 20 at the magnetic transfer step. As shown in FIG. 7, when the recording magnetic field (Hd) is applied to the perpendicular magnetic recording medium 10 and the magnetic transfer master carrier 20 that have been closely attached to each other, a magnetic flux G generated from the magnetic field (Hd) enters the magnetic transfer master carrier 20 and then is absorbed in the magnetic convex portions 40 of the magnetic transfer master carrier 20.

As a result, a strong magnetic field is generated in the magnetic convex portions 40 of the magnetic transfer master carrier 20. Meanwhile, a magnetic field of concave portions 204 of the magnetic transfer master carrier 20-interspaces between the magnetic convex portions 40-is weaker than that of the magnetic convex portions 40. In this manner, a magnetic field pattern corresponding to information to be recorded is formed on the perpendicular magnetic recording medium 10.

As a result, portions of the magnetic layer contained in the perpendicular magnetic recording medium 10 which correspond to the magnetic convex portions 40 undergo inversion of magnetization for information, recording. Meanwhile, those corresponding to the concave portions 204 do not undergo inversion of magnetization.

FIG. 8 illustrates the direction of magnetization of a magnetic layer of the perpendicular magnetic recording medium obtained after the magnetic transfer step. As shown in FIG. 8, information (e.g., servo signals) is recorded on a magnetic layer of the perpendicular magnetic recording medium 10 in the form of recording magnetization Pd whose direction is opposite to that of the initializing magnetization Pi.

The recording magnetic field (Hd) is appropriately determined depending on the purpose. In general, preferred is a magnetic field whose intensity is 40% to 130% the coercive force (Hc) of a magnetic layer of the perpendicular magnetic recording medium 10. More preferred is a magnetic field whose intensity is 50% to 120% the coercive force (Hc) of a magnetic layer of the perpendicular magnetic recording medium 10.

### EXAMPLES

The present invention will next be described by way of examples, which should not be construed as limiting the present invention thereto.

### Example 1

### Magnetic transfer master carrier

### (Production of mold)

An electron-beam resist was applied onto an Si wafer with a diameter of 20.32 cm (8 inch) (second base material 30) through spin coating so as to have a thickness of 100 nm. Thereafter, the resist applied on the second base material 30 was irradiated with an electron beam modulated correspondingly to, for example, a servo signal using a rotary electron beam exposure apparatus. Then, the resist was developed to remove unexposed portions, whereby the resist pattern of interest was formed on the second base material 30.

Subsequently, using the above-formed patterned resist as a mask, the second base material 30 was subjected to a reactive etching treatment to etch portions having no resist (i.e., non-masked portions), whereby concave portions 35 were formed. After this etching treatment, the resist remaining on the second base material 30 was washed/removed with a solvent. Then, the second base material 30 was dried to produce a mold 36 used for producing a magnetic transfer master carrier.

### (Production of magnetic transfer master carrier)

### < Magnetic layer-forming step >

A Ta underlying layer (thickness: 10 nm) was formed on a (silicon) first base material 200 through sputtering. Then, an Ru underlying layer (thickness: 10 nm) was formed on the Ta underlying layer through sputtering. The conditions under which the sputtering was performed were as follows.

### < Ta film >

Target material: Ta
Distance between target and first base material: 200 mm
Pressure: 0.5 Pa
DC power: 350 W

### < Ru film >

Target material: Ru
Distance between target and first base material: 200 mm
Pressure: 0.3 Pa
DC power: 300 W

Thereafter, a magnetic layer 4 (thickness: 40 nm) made of CoPt was formed on the underlying layer through sputtering. The conditions under which the magnetic layer 4 was formed were as follows.
Target material: Co₈₀Pt₂₀
Distance between target and first base material: 200 mm
Pressure: 0.1 Pa
DC power: 1,000 W

Through the above procedure, a laminate 5 was obtained.

### < Imprint resist layer-forming step >

An imprint resist composition liquid (novolac resin) was applied onto the magnetic layer 4 of the above-obtained laminate 5 through spin coating so as to have a thickness of 25 nm, whereby an imprint resist layer 39 was formed.

### < Resist pattern-forming step >

The concave portions 35 of the mold 36 were pressed against the thus-formed imprint resist layer 39. The mold 36 was applied to the imprint resist layer at a pressing force of 3 MPa for 10 sec under heating at 120°C, followed by curing of the resist.

### < Magnetic convex portion-forming step >

Then, the mold 36 was removed from the imprint resist layer 39 to obtain a resist pattern (height: 100 nm) in the magnetic layer 4 of the laminate 5, which pattern was made of the imprint resist layer 39. The resist pattern was subjected to O₂ RIE to remove the resist remaining on imprint portions (concave portions).

Using the resist pattern as a mask, the magnetic layer 4 was etched with an Ar ion beam under the following conditions. As a result of this etching, magnetic convex portions 40 were formed on the first base material 200.

Thereafter, the resist pattern remaining on the magnetic convex portions 40 was removed through O₂ RIE.

Then, the first base material 200 on which the magnetic convex portions 40 have been formed was washed and dried to produce a magnetic transfer master carrier.

### Perpendicular magnetic recording medium

The below-described layers were formed in the following manner on a glass substrate with a diameter of 6.35 cm (2.5 inch) to produce a perpendicular magnetic recording medium.

Specifically, the produced perpendicular magnetic recording medium had, in sequence, a soft magnetic layer, a first non-magnetic orientation layer, a second non-magnetic orientation layer, a magnetic layer, a protective layer and a lubricating layer.

Notably, the soft magnetic layer, the first non-magnetic orientation layer, the second non-magnetic orientation layer, the magnetic layer and the protective layer were formed through sputtering, and the lubricating layer was formed by a dip method.

### (Formation of soft magnetic layer)

The soft magnetic layer was made of CoZrNb so as to have a thickness of 100 nm.

Specifically, while an Ar gas was being fed into a chamber so that the gas pressure was adjusted to 0.6 Pa, the glass substrate was discharged at a DC power of 1,500 W with being placed so as to face a CoZrNb target.

### (Formation of first non-magnetic orientation layer)

The first non-magnetic orientation layer was made of Ti so as to have a thickness of 5 nm.

Specifically, while an Ar gas was being fed into a chamber so that the gas pressure was adjusted to 0.5 Pa, the glass substrate on which the soft magnetic layer has been formed was discharged at a DC power of 1,000 W with being placed so as to face a Ti target.

### (Formation of second non-magnetic orientation layer)

The second non-magnetic orientation layer was made of Ru so as to have a thickness of 6 nm.

Specifically, while an Ar gas was being fed into a chamber so that the gas pressure was adjusted to 0.8 Pa, the glass substrate over which the first non-magnetic orientation layer has been formed was discharged at a DC power of 900 W with being placed so as to face an Ru target.

### (Formation of magnetic layer)

The magnetic layer was made of CoCrPtO so as to have a thickness of 18 nm.

Specifically, while an Ar gas containing O₂ (0.06%) was being fed into a chamber so that the gas pressure was adjusted to 14 Pa, the glass substrate over which the second non-magnetic orientation layer has been formed was discharged at a DC power of 290 W with being placed so as to face a CoCrPtO target.

### (Formation of protective layer)

The protective layer was made of C so as to have a thickness of 4 nm.

Specifically, while an Ar gas was being fed into a chamber so that the gas pressure was adjusted to 0.5 Pa, the glass substrate over which the magnetic layer has been formed was discharged at a DC power of 1,000 W with being placed so as to face a C target.

### (Formation of lubricating layer)

The lubricating layer was made of a PFPE lubricant so as to have a thickness of 2 nm.

The perpendicular magnetic recording medium was found to have a coercive force of 334 kA/m (4.2 kOe).

### Magnetic transfer

### (Initial magnetization step)

The perpendicular magnetic recording medium 10 was initially magnetized by applying a DC magnetic field (Hi) having an intensity of 10 kOe thereto.

### (Closely attaching step)

The above-produced magnetic transfer master carrier was closely attached to the initially magnetized perpendicular magnetic recording medium at a pressure of 9 kg/cm².

### (Magnetic transfer step)

A recording magnetic field was applied to the perpendicular magnetic recording medium and the magnetic transfer master carrier that have been closely attached. The intensity of the recording magnetic field was 3.4 kOe.

Thereafter, application of the recording magnetic field was terminated and then, the magnetic transfer master carrier was separated from the perpendicular magnetic recording medium.

The thus-produced magnetic transfer master carrier was evaluated as follows.

### Evaluation 1: Processing accuracy of magnetic convex portions

The patterned magnetic convex portions were evaluated for uniformity of their widths using an AFM (Dimension 5000, product of Nihon Veeco Co.). Specifically, almost equally-spaced 16 sites in a circle with a radius of 15 mm were measured to obtain data relating to the concavo-convex pattern; i.e., widths of the magnetic convex portions at heights 80% the heights of the portions, and dimensions of side surfaces of the magnetic convex portions. The standard deviations of the widths and dimensions were calculated to evaluate variation in them. Note that each of the sites had an area of 1 µm × 1 µm. The results are shown in Table 1.

### Evaluation 2: Servo signal quality

There were evaluated qualities of servo signals recorded on the magnetic recording medium through magnetic transfer using the magnetic transfer master carrier. Specifically, reproduced outputs (track average amplitude (TAN) in a preamble area were detected in each sector within a circle of radius of 15 mm, and then the SNR of the outputs was calculated to evaluate servo signal quality. This evaluation was carried out using LS-90 (product of Kyodo Denshi Co.) and a GMR head (read width: 120 nm, and write width: 200 nm). The results are shown in Table 1.

### Comparative Example 1

### (Magnetic transfer master carrier)

### < Production of original master >

An electron-beam resist was applied onto a disc-shaped Si substrate with a diameter of 20.32 cm (8 inch) through spin coating so as to have a thickness of 100 nm. Thereafter, the resist applied on the Si substrate was irradiated with an electron beam modulated correspondingly to, for example, a servo signal using a rotary electron beam exposure apparatus. Then, the resist was developed to remove unexposed portions, whereby the resist pattern of interest was formed on the substrate.

Subsequently, using the above-formed patterned resist as a mask, the Si substrate was subjected to a reactive etching treatment to etch portions having no resist (i.e., non-masked portions), whereby concave portions were formed. After this etching treatment, the resist remaining on the Si substrate was washed/removed with a solvent. Then, the substrate was dried to produce an original master used for producing a magnetic transfer master carrier.

First, an Ni thin film was formed through sputtering on a concavo-convex pattern of the above-produced original master. Subsequently, Ni plating (electrodeposition) was performed using the original master as an original plate, to thereby form an Ni layer. Thereafter, the Ni layer was removed from the original plate, followed by washing, whereby an Ni substrate was obtained. The thus-obtained Ni substrate had a concavo-convex surface.

Then, a Ta film (thickness: 5 nm), an Ru film (thickness: 5 nm) and a Co₈₀Pt₂₀ film (thickness: 40 nm) were sequentially formed through sputtering on the convex portions of the Ni substrate, to thereby produce a magnetic transfer master carrier of Comparative Example 1.

Similar to Example 1, the magnetic transfer master carrier of Comparative Example 1 was evaluated according to Evaluations 1 and 2. The results are shown in Table 1.

**Table 1**

| | Width of convex portion at height 80% the height thereof (nm) | Processing accuracy of convex portions: 3σ (nm) | Servo signal quality: SNR (dB) |
|---|---|---|---|
| Ex.1 | 67 | 13 | 14.3 |
| Comp. Ex. 1 | 78 | 11 | 11.7 |

As is clear from Table 1, the magnetic transfer mold structure of Example 1 was equal to that of Comparative Example 1 in terms of processing accuracy of their convex portions (i.e., 13 nm vs. 11 nm). Nevertheless, the magnetic transfer mold structure of Example 1 was found to exhibit better (or higher) servo signal quality as compared with that of Comparative Example 1. Presumably, the reason for this is as follows. Specifically, in Comparative Example 1, the line widths of the convex portions were larger since the magnetic layer was formed after formation of a concavo-convex pattern; and the magnetic layer was formed not only the convex portions but also the concave portions.

## Claims

1. A production method of a magnetic transfer master carrier, the production method comprising:
forming an imprint resist layer on a surface of a magnetic layer of a laminate which comprises a first base material and the magnetic layer laminated on the first base material,
forming a resist pattern, following shapes of concave portions of a mold, on the surface of the magnetic layer by pressing the concave portions against the imprint resist layer, and
forming magnetic convex portions on the first base material by removing the mold from the imprint resist layer and then etching a surface of the magnetic layer which surface has no resist pattern,
wherein the mold comprises a second base material and the concave portions formed by etching a surface of the second base material so as to correspond to a pattern of information to be recorded on a magnetic recording medium, and
wherein the magnetic transfer master carrier comprises the first base material and the magnetic convex portions made of a magnetic material, the magnetic convex portions being arranged on the first base material correspondingly to the pattern of the information, and forms a magnetic field pattern by absorbing a magnetic flux in the magnetic convex portions when a magnetic field is applied to the magnetic transfer master carrier.

2. The production method according to claim 1, wherein the laminate further comprises an underlying layer between the first base material and the magnetic layer.

3. The production method according to claim 1 or 2, wherein the magnetic layer has perpendicular magnetic anisotropy.

4. A magnetic transfer master carrier comprising:
a first base material, and
magnetic convex portions made of a magnetic material, the magnetic convex portions being arranged on the first base material correspondingly to a pattern of information to be recorded on a magnetic recording medium,
wherein the magnetic transfer master carrier forms a magnetic field pattern by absorbing a magnetic flux in the magnetic convex portions when a magnetic field is applied to the magnetic transfer master carrier, and is obtained by the production method according to any one of claims 1 to 3.

5. A magnetic transfer method comprising:
initially magnetizing a perpendicular magnetic recording medium by applying a magnetic field thereto,
closely attaching the magnetic transfer master carrier according to claim 4 to the initially magnetized perpendicular magnetic recording medium, and
magnetically transferring information to the perpendicular magnetic recording medium by applying thereto a magnetic field whose direction is opposite to a direction of the magnetic field applied in the initial magnetization, with the perpendicular magnetic recording medium and the magnetic transfer master carrier being closely attached to each other, so that the information is recorded on the perpendicular magnetic recording medium.

6. A magnetic recording medium obtained by the magnetic transfer method according to claim 5.
